# EUROPEAN PATENT SPECIFICATION

(11) **EP 4 322 546 B1**
(45) Date of publication and mention of the grant of the patent: **30.07.2025**
(21) Application number: 22827048.4
(22) Date of filing: 07.03.2022
(51) Int. Cl.: H04Q 11/00

(54) **DATA FRAME FRAGMENTATION METHOD, DATA FRAME PARSING METHOD AND RELATED DEVICE**
DATENRAHMENFRAGMENTIERUNGSVERFAHREN, DATENRAHMENPARSINGVERFAHREN UND ZUGEHÖRIGE VORRICHTUNG
PROCÉDÉ DE FRAGMENTATION DE TRAME DE DONNÉES, PROCÉDÉ D'ANALYSE DE TRAME DE DONNÉES ET DISPOSITIF ASSOCIÉ

(30) Priority: 22.06.2021 CN 202110694345
(43) Date of publication of application: 14.02.2024
(73) Proprietor: Huawei Technologies Co., Ltd., Shenzhen, Guangdong 518129 (CN)
(72) Inventor: YAN, Linzhi, Shenzhen, Guangdong 518129 (CN); ZHANG, Lun, Shenzhen, Guangdong 518129 (CN); NIE, Shiwei, Shenzhen, Guangdong 518129 (CN)
(74) Representative: Pfenning, Meinig & Partner mbB
(86) International application number: PCT/CN2022/079466
(87) International publication number: WO 2022/267543

(56) References cited:
- WO-A1-2017/008713
- CN-A- 101 043 294
- CN-A- 106 717 017
- US-A1- 2017 105 061

## Description

### TECHNICAL FIELD

This application relates to the field of optical communications, and in particular, to a data frame fragmentation method, a data frame parsing method, and a related device.

### BACKGROUND

Currently, a passive optical network (Passive Optical Network, PON) system is used in more scenarios, and such scenarios have requirements for a low delay and a low jitter. Currently, the PON system includes a gigabit-capable PON (gigabit-capable PON, GPON), a 10 gigabits per second PON (10 gigabits per second PON, XG-PON), a 10-gigabit-capable symmetric passive optical network (10-gigabit-capable symmetric passive optical network, XGS-PON), a 25 gigabits per second PON (25 gigabits per second PON, 25G-PON), a 50 gigabits per second PON (50 gigabits per second PON, 50G-PON), and the like. WO2017008713 A1 discloses (see Figures 2 to 4 and 6) a method of fragmented packet transmission in a multiple-channel passive optical network (PON), including fragmenting, by a Gigabit-PON encapsulation method (GEM) /next generation-PON encapsulation method (XGEM) engine of a network element, data into a plurality of packet fragments, encapsulating, by the GEM/XGEM engine, the plurality of packet fragments into frames, scheduling, by a bonding block of the network element, transmission of the frames on a plurality of channels, wherein an order for transmitting the frames is based in part on channel availability, and transmitting, by a transmitter of the network element, the frames to a receiver on the plurality of channels according to the scheduling.

According to an existing standard, a service packet can be sent only after each frame header is sent as a whole. Using the XGS-PON as an example, a length of a frame header = 4 + 8 x B + 48 x P, where B is a quantity of bandwidth maps (bandwidth maps, BWmaps), and P is a quantity of physical layer operations, administration, and maintenance (Physical Layer Operations, Administration, and Maintenance, PLOAM) messages. Therefore, the length of the frame header may be tens of bytes to thousands of bytes. If a large quantity of BWmaps and PLOAM messages need to be sent, a high delay is caused for sending the service packet.

### SUMMARY

This application provides a data frame fragmentation method, a data frame parsing method, and a related device. If a length of a frame header exceeds a specified length, an OLT actively performs fragmentation on the frame header. Preemption by a packet is allowed between subframe headers after the fragmentation, so that a packet transmission delay can be reduced.

According to a first aspect, this application provides a data frame fragmentation method. The method includes: An OLT generates an original data frame. The original data frame includes a frame header and a packet. If a length of the frame header is greater than a first preset value, the OLT performs fragmentation on the frame header to obtain a target data frame. A length of each subframe header after the frame header is fragmented is less than or equal to the first preset value. The target data frame includes a plurality of codewords. At least one codeword includes a first field. Each codeword includes a second field. The at least one codeword further includes a third field. The first field is used for carrying the subframe header and a first packet having a low priority. The second field is used for carrying a check code. The third field is used for carrying a second packet having a high priority. A sending order of the first packet is after a subframe header with a front most sending order, and the sending order of the first packet is before a sending order of at least one subframe header. Further, the OLT sends the target data frame to an optical network unit ONU.

In this implementation, if the length of the frame header exceeds a specified length, the OLT actively performs fragmentation on the frame header. The length of each subframe header after the fragmentation does not exceed the specified length. In addition, preemption by the packet is allowed between the subframe headers after the fragmentation. In other words, there is no need to wait for an entire frame header to be sent before sending the packet, and the packet can be sent between any subframe headers, thereby reducing a packet transmission delay. In addition, the codewords generated by the OLT include a field that carries a frame header and a packet having a low priority, and may further reserve, in some or all codewords, a field for a packet having a high priority, so that a transmission delay of the packet having a high priority can be reduced.

In some possible implementations, the frame header is a physical control block downstream (Physical Control Block downstream, PCBd). To enable the ONU to parse the subframe header after the fragmentation, the OLT needs to use a GPON encapsulation mode (GPON Encapsulation Mode, GEM) for other subframe headers other than a first subframe header. However, the first subframe header at a start position after the fragmentation still uses a PCBd format before the fragmentation. Alternatively, the frame header may be a superframe (Superframe, FS) frame header. To enable the ONU to parse the subframe header after the fragmentation, the OLT needs to use an XG-PON encapsulation mode (XG-PON Encapsulation Mode, XGEM) for other subframe headers other than a first subframe header. However, the first subframe header at a start position after the fragmentation still uses an FS frame header format before the fragmentation.

In some possible implementations, each subframe header includes a target GEM port identifier or a target XGEM port identifier. Before the OLT sends the target data frame to the ONU, the method further includes: The OLT sends a first notification message to the ONU. The first notification message includes the target GEM port identifier or the target XGEM port identifier. It should be understood that the packet also needs to be encapsulated by using the GEM or the XGEM. To enable the ONU to distinguish between the packet and the subframe header, a dedicated target GEM port identifier or a dedicated target XGEM port identifier needs to be defined for the subframe header, to differentiate the dedicated target GEM port identifier or the dedicated target XGEM port identifier from a GEM port identifier or an XGEM port identifier in the packet. The OLT sends the target GEM port identifier or the target XGEM port identifier to each ONU in advance, so that the ONU can successfully parse each subframe header after receiving the target data frame.

In some possible implementations, the ONU includes a first ONU and a second ONU. The first ONU supports to perform fragmentation on the frame header, and the second ONU does not support to perform fragmentation on the frame header. Each subframe header in the target data frame sent by the OLT to the first ONU includes a bandwidth map (bandwidth map, BWmap) and a physical layer operations, administration, and maintenance downstream (Physical Layer Operations, Administration, and Maintenance downstream, PLOAMd) message. A target subframe header sent by the OLT to the second ONU includes a BWmap and a PLOAM message. The target subframe header is the subframe header with the front most sending order in the target data frame. The foregoing processing manner is applicable to a scenario in which both old and new ONUs exist, and can be compatible with a new ONU that supports frame header fragmentation and an old ONU that does not support fragmentation, thereby improving practicability of this solution.

In some possible implementations, before the OLT sends the target data frame to the ONU, the method further includes: If the sending order of the first packet is before a sending order of the second packet and a length of the first packet is greater than a second preset value, the OLT performs fragmentation on the first packet. A length of each subpacket after the first packet is fragmented is less than or equal to the second preset value. The sending order of the second packet is after a subpacket with a front most sending order, and the sending order of the second packet is before a sending order of at least one subpacket. In the foregoing manner, after the first packet having a low priority is fragmented, the second packet having a high priority is allowed to preempt a position, so that a transmission delay of a packet having a high priority can be effectively reduced.

In some possible implementations, each subpacket is encapsulated by using the GEM or the XGEM, to be compatible with an existing standard, to facilitate parsing of each subpacket by the ONU.

In some possible implementations, the third field includes a plurality of subfields, and each subfield is used for carrying a part of the second packet. Different subfields may carry services belonging to different ONUs, so that practicability of this solution can be further improved.

In some possible implementations, before the OLT sends the target data frame to the ONU, the method further includes: The OLT sends a second notification message to the ONU. The second notification message indicates a target subfield corresponding to the ONU and a start position and a length of the target subfield. It should be understood that the third field is encapsulated as a whole by using the GEM or the XGEM. However, to reduce overheads, each subfield is no longer encapsulated one by one by using the GEM or the XGEM. Therefore, the OLT needs to send configuration information of each subfield to each ONU, to facilitate extraction of data from a corresponding subfield by each ONU.

According to a second aspect, this application provides a data frame parsing method. The method includes: An ONU receives a target data frame sent by an OLT. The target data frame is obtained by performing fragmentation by the OLT on a frame header of an original data frame. A length of each subframe header after the frame header is fragmented is less than or equal to a first preset value. The target data frame includes a plurality of codewords. At least one codeword includes a first field. Each codeword includes a second field. The at least one codeword further includes a third field. The first field is used for carrying the subframe header and a first packet. The second field is used for carrying a check code. The third field is used for carrying a second packet. A priority of the first packet is lower than a priority of the second packet. A sending order of the first packet is after a subframe header with a front most sending order, and the sending order of the first packet is before a sending order of at least one subframe header. Further, the ONU sequentially parses the codewords in the target data frame.

In some possible implementations, the frame header is a PCBd. To enable the ONU to parse the subframe header after the fragmentation, the OLT needs to encapsulate other subframe headers other than a first subframe header by using a GEM. However, the first subframe header at a start position after the fragmentation still uses a PCBd format before the fragmentation. Alternatively, the frame header may be an FS frame header. To enable the ONU to parse the subframe header after the fragmentation, the OLT needs to encapsulate other subframe headers other than a first subframe header by using an XGEM. However, the first subframe header at a start position after the fragmentation still uses an FS frame header format before the fragmentation.

In some possible implementations, each subframe header includes a target GEM port identifier or a target XGEM port identifier. Before the ONU receives the target data frame sent by the OLT, the method further includes: The ONU receives a first notification message sent by the OLT. The first notification message includes the target GEM port identifier. The target GEM port identifier indicates a subframe header encapsulated by using the GEM. Alternatively, the first notification message includes the target XGEM port identifier. The target XGEM port identifier indicates a subframe header encapsulated by using the XGEM.

In some possible implementations, if the ONU supports to perform fragmentation on the frame header, each subframe header includes a BWmap and a PLOAM message. If the ONU does not support to perform fragmentation on the frame header, a target subframe header includes a BWmap and a PLOAM message. The target subframe header is the subframe header with the front most sending order in the target data frame.

In some possible implementations, if the sending order of the first packet is before a sending order of the second packet and a length of the first packet is greater than a second preset value, the first packet is fragmented by the OLT into a plurality of subpackets. A length of each subpacket is less than or equal to the second preset value. The sending order of the second packet is after a subpacket with a front most sending order, and the sending order of the second packet is before a sending order of at least one subpacket.

In some possible implementations, each subpacket is encapsulated by using the GEM or the XGEM.

In some possible implementations, the third field includes a plurality of subfields, and each subfield is used for carrying a part of the second packet.

In some possible implementations, before the ONU receives the target data frame sent by the OLT, the method further includes: The ONU receives a second notification message sent by the OLT. The second notification message indicates a target subfield corresponding to the ONU and a start position and a length of the target subfield.

According to a third aspect, this application provides an OLT. The OLT includes a processor and a transceiver. The processor and the transceiver are connected to each other through a line. The processor is configured to perform some or all steps of any method according to the first aspect.

In some possible implementations, the OLT further includes a memory. The processor calls program code in the memory to perform some or all steps of any method according to the first aspect.

According to a fourth aspect, this application provides an ONU. The ONU includes a processor and a transceiver. The processor and the transceiver are connected to each other through a line. The processor is configured to perform some or all steps of any method according to the second aspect.

In some possible implementations, the ONU further includes a memory. The processor calls program code in the memory to perform some or all steps of any method according to the second aspect.

According to a fifth aspect, this application provides an OLT. The OLT includes a processing unit and a transceiver unit. The processing unit is configured to generate an original data frame. The original data frame includes a frame header and a packet. If a length of the frame header is greater than a first preset value, the OLT performs fragmentation on the frame header to obtain a target data frame. A length of each subframe header after the frame header is fragmented is less than or equal to the first preset value. The target data frame includes a plurality of codewords. At least one codeword includes a first field. Each codeword includes a second field. The at least one codeword further includes a third field. The first field is used for carrying the subframe header and a first packet having a low priority. The second field is used for carrying a check code. The third field is used for carrying a second packet having a high priority. A sending order of the first packet is after a subframe header with a front most sending order, and the sending order of the first packet is before a sending order of at least one subframe header. Further, the transceiver unit is configured to send, by the OLT, the target data frame to an optical network unit ONU.

In some possible implementations, the frame header is a PCBd. To enable the ONU to parse the subframe header after the fragmentation, the OLT needs to encapsulate other subframe headers other than a first subframe header by using a GEM. However, the first subframe header at a start position after the fragmentation still uses a PCBd format before the fragmentation. Alternatively, the frame header may be an FS frame header. To enable the ONU to parse the subframe header after the fragmentation, the OLT needs to encapsulate other subframe headers other than a first subframe header by using an XGEM. However, the first subframe header at a start position after the fragmentation still uses an FS frame header format before the fragmentation.

In some possible implementations, each subframe header includes a target GEM port identifier or a target XGEM port identifier. Before the transceiver unit sends the target data frame to an ONU, the transceiver unit is further configured to send a first notification message to the ONU. The first notification message includes the target GEM port identifier. The target GEM port identifier indicates a subframe header encapsulated by using the GEM. Alternatively, the first notification message includes the target XGEM port identifier. The target XGEM port identifier indicates a subframe header encapsulated by using the XGEM.

In some possible implementations, the ONU includes a first ONU and a second ONU. The first ONU supports to perform fragmentation on the frame header, and the second ONU does not support to perform fragmentation on the frame header. Each subframe header in the target data frame sent by the OLT to the first ONU includes a BWmap and a PLOAM message. A target subframe header sent by the OLT to the second ONU includes a BWmap and a PLOAM message. The target subframe header is the subframe header with the front most sending order in the target data frame.

In some possible implementations, before the transceiver unit sends the target data frame to the ONU, the processing unit is further configured to: if the sending order of the first packet is before a sending order of the second packet and a length of the first packet is greater than a second preset value, perform fragmentation on the first packet. A length of each subpacket after the first packet is fragmented is less than or equal to the second preset value. The sending order of the second packet is after a subpacket with a front most sending order, and the sending order of the second packet is before a sending order of at least one subpacket.

In some possible implementations, each subpacket is encapsulated by using the GEM or the XGEM.

In some possible implementations, the third field includes a plurality of subfields, and each subfield is used for carrying a part of the second packet.

In some possible implementations, before the transceiver unit sends the target data frame to the ONU, the transceiver unit is further configured to send a second notification message to the ONU. The second notification message indicates a target subfield corresponding to the ONU and a start position and a length of the target subfield.

According to a sixth aspect, this application provides an ONU. The ONU includes a processing unit and a transceiver unit. The transceiver unit is configured to receive a target data frame sent by an optical line terminal OLT. The target data frame is obtained by performing fragmentation by the OLT on a frame header of an original data frame. A length of each subframe header after the frame header is fragmented is less than or equal to a first preset value. The target data frame includes a plurality of codewords. At least one codeword includes a first field. Each codeword includes a second field. The at least one codeword further includes a third field. The first field is used for carrying the subframe header and a first packet. The second field is used for carrying a check code. The third field is used for carrying a second packet. A priority of the first packet is lower than a priority of the second packet. A sending order of the first packet is after a subframe header with a front most sending order, and the sending order of the first packet is before a sending order of at least one subframe header. Further, the processing unit is configured to sequentially parse the codewords in the target data frame.

In some possible implementations, the frame header is a PCBd. To enable the ONU to parse the subframe header after the fragmentation, the OLT needs to encapsulate other subframe headers other than a first subframe header by using a GEM. However, the first subframe header at a start position after the fragmentation still uses a PCBd format before the fragmentation. Alternatively, the frame header may be an FS frame header. To enable the ONU to parse the subframe header after the fragmentation, the OLT needs to encapsulate other subframe headers other than a first subframe header by using an XGEM. However, the first subframe header at a start position after the fragmentation still uses an FS frame header format before the fragmentation.

In some possible implementations, each subframe header includes a target GEM port identifier or a target XGEM port identifier. Before the transceiver unit receives the target data frame sent by the OLT, the transceiver unit is further configured to receive a first notification message sent by the OLT. The first notification message includes the target GEM port identifier. The target GEM port identifier indicates a subframe header encapsulated by using the GEM. Alternatively, the first notification message includes the target XGEM port identifier. The target XGEM port identifier indicates a subframe header encapsulated by using the XGEM.

In some possible implementations, if the ONU supports to perform fragmentation on the frame header, each subframe header includes a BWmap and a PLOAM message. If the ONU does not support to perform fragmentation on the frame header, a target subframe header includes a BWmap and a PLOAM message. The target subframe header is the subframe header with the front most sending order in the target data frame.

In some possible implementations, if the sending order of the first packet is before a sending order of the second packet and a length of the first packet is greater than a second preset value, the first packet is fragmented by the OLT into a plurality of subpackets. A length of each subpacket is less than or equal to the second preset value. The sending order of the second packet is after a subpacket with a front most sending order, and the sending order of the second packet is before a sending order of at least one subpacket.

In some possible implementations, each subpacket is encapsulated by using the GEM or the XGEM.

In some possible implementations, the third field includes a plurality of subfields, and each subfield is used for carrying a part of the second packet.

In some possible implementations, before the transceiver unit receives the target data frame sent by the OLT, the transceiver unit is further configured to receive a second notification message sent by the OLT. The second notification message indicates a target subfield corresponding to the ONU and a start position and a length of the target subfield.

In embodiments of this application, if the length of the frame header exceeds the specified length, the OLT actively performs fragmentation on the frame header. The length of each subframe header after the fragmentation does not exceed the specified length. In addition, preemption by the packet is allowed between the subframe headers after the fragmentation. In other words, there is no need to wait for an entire frame header to be sent before sending the packet, and the packet can be sent between any subframe headers, thereby reducing a packet transmission delay. In addition, the codewords generated by the OLT include the field that carries the frame header and the packet having a low priority, and may further reserve, in some or all codewords, the field for the packet having a high priority, so that a transmission delay of the packet having a high priority can be reduced.

### BRIEF DESCRIPTION OF DRAWINGS

FIG. 1 is a schematic diagram of an architecture of a PON system;
FIG. 2 is a schematic diagram of an embodiment of a data frame fragmentation method according to this application;
FIG. 3(a) is a schematic diagram of a structure of a GTC frame in a GPON standard;
FIG. 3(b) is a schematic diagram of a structure of an FS frame in an XG-PON standard;
FIG. 4(a) is a schematic diagram of a structure of a PCBd in a GTC frame after fragmentation;
FIG. 4(b) is a schematic diagram of a structure of an FS frame header in an FS frame after fragmentation;
FIG. 5 is a schematic diagram of an embodiment of capability negotiation between an OLT and an ONU according to an embodiment of this application;
FIG. 6 is a schematic diagram of a structure of an FEC codeword in an existing standard;
FIG. 7(a) is a schematic diagram of a first structure of an FEC codeword according to an embodiment of this application;
FIG. 7(b) is a schematic diagram of a second structure of an FEC codeword according to an embodiment of this application;
FIG. 7(c) is a schematic diagram of a third structure of an FEC codeword according to an embodiment of this application;
FIG. 8 is a schematic diagram of an embodiment in which an OLT notifies an ONU of configuration information of a subfield according to an embodiment of this application;
FIG. 9 is a schematic diagram of an embodiment of a data frame parsing method according to this application;
FIG. 10 is a schematic diagram of a possible structure of an OLT according to an embodiment of this application;
FIG. 11 is a schematic diagram of another possible structure of an OLT according to an embodiment of this application;
FIG. 12 is a schematic diagram of a possible structure of an ONU according to an embodiment of this application; and
FIG. 13 is a schematic diagram of another possible structure of an ONU according to an embodiment of this application.

### DESCRIPTION OF EMBODIMENTS

This application provides a data frame fragmentation method, a data frame parsing method, and related devices. If a length of a frame header exceeds a specified length, an OLT actively performs fragmentation on the frame header. Preemption by a packet is allowed between subframe headers after the fragmentation, so that a packet transmission delay can be reduced.

This application is mainly applied to a passive optical network (passive optical network, PON) system. The following describes an architecture of the PON system.

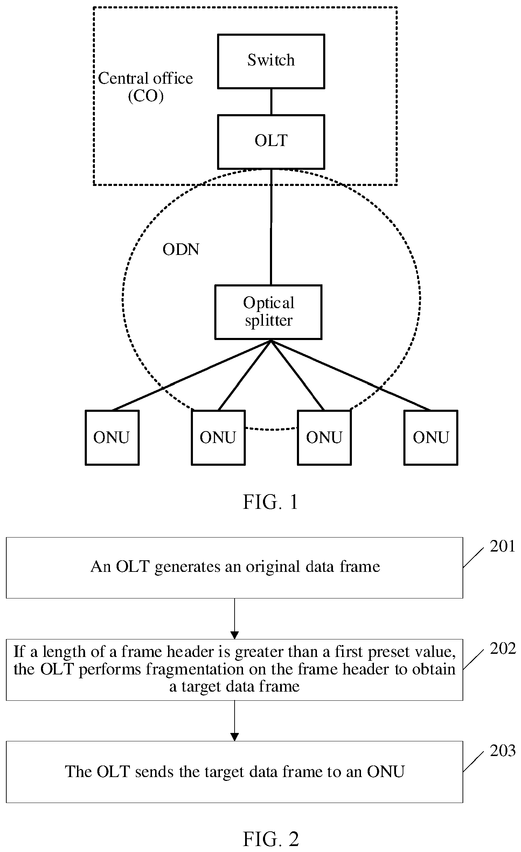

FIG. 1 is a schematic diagram of an architecture of a PON system. An OLT is connected to a network-side device (such as a switch or a router) at an upper layer, and is connected to one or more optical distribution networks (optical distribution networks, ODNs) at a lower layer.

The ODN includes a passive optical splitter configured for optical power distribution, a feeder optical fiber connected between the passive optical splitter and the OLT, and distribution optical fibers connected between the passive optical splitter and ONUs. During downstream data transmission, the ODN transmits downstream data of the OLT to each ONU through the optical splitter, and the ONU selectively receives the downstream data that carries an identifier of the ONU. During upstream data transmission, the ODN combines N channels of optical signals sent by the ONU into one channel of optical signal and transmits the optical signal to the OLT. If the ONU further provides a user port function, for example, the ONU provides an Ethernet user port or a plain old telephone service (plain old telephone service, POTS) user port, the ONU is referred to as an optical network terminal (optical network terminal, ONT).

In some application scenarios in which the PON system is applied, there are usually requirements for a low delay and a low jitter. Therefore, a packet transmission delay, especially a transmission delay of a packet having a high priority, needs to be reduced as much as possible. According to an existing standard, a packet can be sent only after each frame header is sent as a whole. If the frame header is excessively long, a high packet transmission delay is caused. Therefore, this application provides a data frame fragmentation method. Details are described below.

FIG. 2 is a schematic diagram of an embodiment of a data frame fragmentation method according to this application. In this example, the data frame fragmentation method includes the following steps.

201: An OLT generates an original data frame.

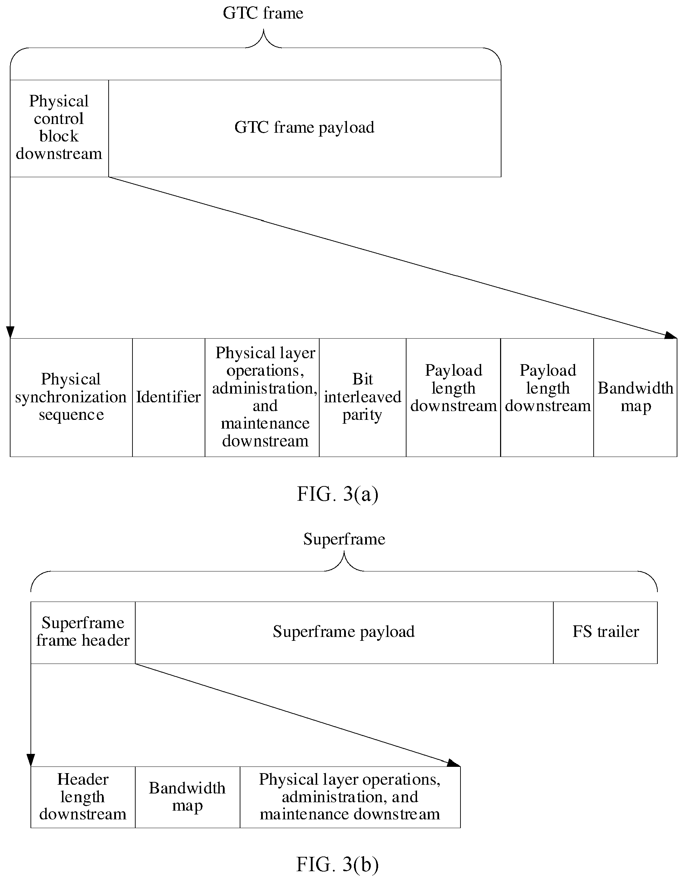

The original data frame includes a frame header and a packet. The frame header is at a start position in the original data frame. It should be understood that there are some differences frame header formats used in different PON standards. For example, in a GPON standard, a frame header is a physical control block downstream (Physical Control Block downstream, PCBd). FIG. 3(a) is a schematic diagram of a structure of a GTC frame in the GPON standard. As shown in FIG. 3(a), a PCBd includes a physical synchronization sequence (Physical synchronization sequence, Psync), an identifier (Ident), physical layer operations, administration, and maintenance downstream (Physical Layer Operations, Administration, and Maintenance downstream, PLOAMd), bit interleaved parity (Bit Interleaved Parity, BIP), a payload length downstream (Payload Length downstream, Plend), and a bandwidth map (bandwidth map, BWmap). A superframe payload (FS payload) is used for carrying a packet. For another example, in a standard such as an XG-PON standard, an XGS-PON standard, a 25G-PON standard, or a 50G-PON standard, a frame header is a superframe (Superframe, FS) frame header. FIG. 3(b) is a schematic diagram of a structure of an FS frame in the XG-PON standard. As shown in FIG. 3(b), the FS frame header includes a header length downstream (Header Length downstream, Hlend), a BWmap, and a PLOAMd. A GTC frame payload is used for carrying a packet.

In some possible implementations, the original data frame includes a plurality of packets with different priorities. For example, the original data frame includes a first packet and a second packet. The first packet is a common packet, and the second packet is a delay-sensitive packet. In other words, a priority of the first packet is lower than a priority of the second packet.

202: If a length of the frame header is greater than a first preset value, the OLT performs fragmentation on the frame header to obtain a target data frame.

In this embodiment, if the length of the frame header is excessively long, the OLT may actively perform fragmentation on the frame header into a plurality of subframe headers. A length of each subframe header after the fragmentation is less than or equal to the first preset value. In addition, after the frame header is fragmented, a packet is allowed to preempt a position between the subframe headers. In other words, a sending order of the packet may be before a sending order of at least one subframe header. It should be understood that a first subframe header after the frame header is fragmented is still at a start position of the data frame. Therefore, the sending order of the packet is after a sending order of the first subframe header. It should be noted that a specific length of each subframe header is not limited in this application. The fragmentation may be performed in an equal division manner, so that lengths of the subframe headers are the same as possible. Alternatively, the length of each subframe header may be randomly adjusted. The foregoing first preset value may be flexibly configured. An example in which the FS frame header has 128 BWmaps and 64 PLOAMds is used. A total length of the FS frame header is 4100 bytes. If the first preset value is set to 512 bytes, the FS frame header may be fragmented into nine subframe headers. If a length of the first subframe header is 512 bytes, the packet can be sent at the fastest only by waiting for the 512-byte subframe header to be sent.

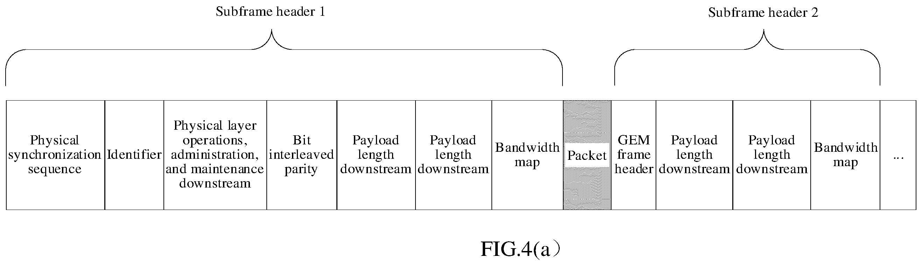

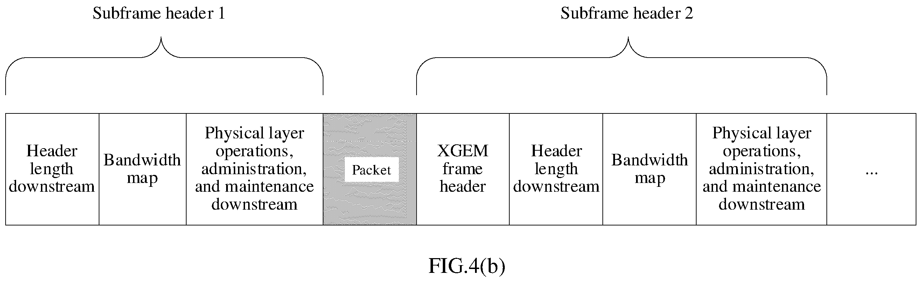

To be compatible with an existing standard, to enable an ONU to parse the subframe header after the fragmentation, the OLT needs to use a GPON encapsulation mode (GPON Encapsulation Mode, GEM) or an XG-PON encapsulation mode (XG-PON Encapsulation Mode, XGEM) for other subframe headers other than the first subframe header. However, the first subframe header at the start position after the fragmentation still uses a frame header format before the fragmentation. FIG. 4(a) is a schematic diagram of a structure of a PCBd in a GTC frame after fragmentation. As shown in FIG. 4(a), a subframe header 1 uses a frame header format before the PCBd is fragmented, a subframe header 2 is encapsulated by using the GEM, and a packet is located between the subframe header 1 and the subframe header 2. In each subframe header, a quantity of BWmaps is indicated by using a Plend. Because the Plend does not support error correction, the Plend needs to be repeatedly sent twice in each subframe header. The ONU may select a Plend with correct cyclic redundancy check (Cyclic Redundancy Check, CRC) to use. FIG. 4(b) is a schematic diagram of a structure of an FS frame header in an FS frame after fragmentation. As shown in FIG. 4(b), a subframe header 1 uses a frame header format before the FS frame header is fragmented, a subframe header 2 is encapsulated by using the XGEM, and a packet is located between the subframe header 1 and the subframe header 2. A Hlend in each subframe header indicates a quantity of PLOAMds and a quantity of BWmaps. Through comparison, it can be learned that after the PCBd is fragmented, the PLOAMd and the BWmap are sent only at a first subframe header, and other subframe header only needs to send the BWmaps. However, each subframe header after the FS frame header is fragmented supports to send the PLOAMd and the BWmap. For the subframe header after the fragmentation, only the PLOAMd may be sent, only the BWmap may be sent, or both the PLOAMd and the BWmap may be sent.

It should be noted that each subframe header encapsulated by using the GEM has a GEM port identifier (GEM Port ID). The GEM port identifier is in the GEM frame header shown in FIG. 4(a). Similarly, each subframe header encapsulated by using the XGEM has an XGEM port identifier (XGEM Port ID). The XGEM port identifier is in the XGEM frame header shown in FIG. 4(b). It should be understood that the packet also needs to be encapsulated by using the GEM or the XGEM. To enable the ONU to distinguish between the packet and the subframe header, a dedicated GEM Port ID or a dedicated XGEM Port ID needs to be defined for the subframe header, to differentiate the dedicated GEM Port ID or the dedicated XGEM Port ID from a GEM Port ID or an XGEM Port ID in the packet. To enable each ONU to know in advance the subframe header encapsulated by using the GEM or the XGEM, the OLT needs to send the dedicated GEM Port ID or the dedicated XGEM Port ID to each ONU in advance. Specifically, the OLT may send a first notification message to each ONU. The first notification message includes the dedicated GEM Port ID or the dedicated XGEM Port ID. After receiving a response message sent by the ONU, the OLT may send, to the ONU, the target data frame after the frame header is fragmented.

In some possible implementations, not all ONUs support frame header fragmentation. For an ONU that supports frame header fragmentation and an ONU that does not support frame header fragmentation, there are some differences in processing manners, and capability negotiation needs to be performed between the OLT and the ONU, which is described below.

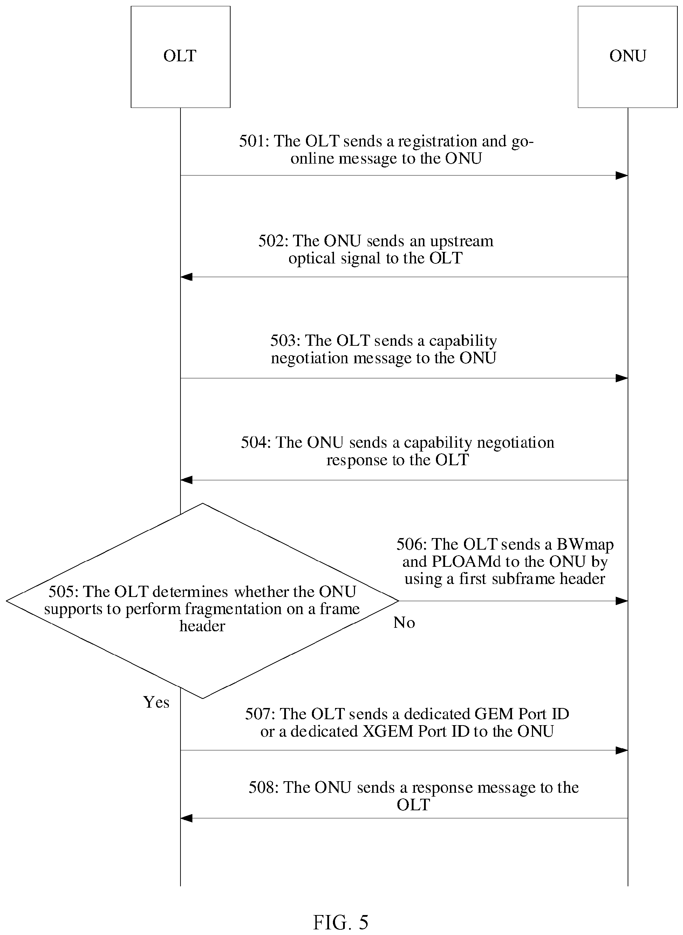

FIG. 5 is a schematic diagram of an embodiment of capability negotiation between the OLT and the ONU according to an embodiment of this application.

501: The OLT sends a registration and go-online message to the ONU.

Because the OLT does not determine whether the ONU supports frame header fragmentation, the OLT sends, to the ONU by using a first subframe header after the frame header is fragmented, PLOAMd and a BWmap related to registration and going online. In this way, even if the ONU does not support frame header fragmentation, the registration and go-online message sent by the OLT can be parsed by using the first subframe header.

502: The ONU sends an upstream optical signal to the OLT.

The OLT may obtain a serial number (Serial Number, SN) of the ONU through the upstream optical signal sent by the ONU. In this case, the OLT may allocate a corresponding identity document (Identity document, ID) to the ONU. Further, the OLT performs ranging on the ONU, and allocates a corresponding upstream transmission slot to the ONU to complete registration of the ONU.

503: The OLT sends a capability negotiation message to the ONU.

The OLT sends the capability negotiation message to the ONU, to indicate the ONU to report whether the ONU supports the OLT to perform fragmentation on a frame header.

504: The ONU sends a capability negotiation response to the OLT.

After receiving the capability negotiation message sent by the OLT, the ONU reports, to the OLT, whether the ONU has a capability of supporting frame header fragmentation.

505: The OLT determines whether the ONU supports frame header fragmentation. If the ONU does not support frame header fragmentation, step 506 is performed. If the ONU supports frame header fragmentation, step 507 is performed.

506: The OLT sends PLOAMd and a BWmap to the ONU by using the first subframe header.

If the ONU does not support frame header fragmentation, it indicates that the ONU cannot parse a subframe header encapsulated by using the GEM or the XGEM. In this case, the OLT sends the PLOAMd and the BWmap to the ONU by using the first subframe header.

507: The OLT sends a dedicated GEM Port ID or a dedicated XGEM Port ID to the ONU.

If the ONU supports frame header fragmentation, it indicates that the ONU can parse a subframe header encapsulated by using the GEM or the XGEM. Therefore, the ONU needs to send the dedicated GEM Port ID or the dedicated XGEM Port ID to the ONU in advance, so that the ONU can successfully parse each subframe header. Specifically, the OLT may send the dedicated GEM Port ID or the dedicated XGEM Port ID to the ONU through a PLOAM message or an optical network unit management and control interface (ONU Management and Control Interface, OMCI) message.

508: The ONU sends a response message to the OLT.

The ONU sends the response message to the OLT to notify the OLT that the ONU has received the dedicated GEM Port ID or the dedicated XGEM Port ID. It should be noted that before receiving the response message sent by the ONU, the OLT still sends the PLOAMd and the BWmap to the ONU only by using the first subframe header. After receiving the response sent by the ONU, the OLT may send the PLOAMd and the BWmap to the ONU by using the plurality of subframe headers after the frame header is fragmented.

It should be understood that the foregoing processing manner is applicable to a scenario in which both old and new ONUs exist, and can be compatible with a new ONU that supports frame header fragmentation and an old ONU that does not support fragmentation. Certainly, in some specific scenarios, if all ONUs support frame header fragmentation, the OLT may alternatively directly send the dedicated GEM Port ID or the dedicated XGEM Port ID to the ONU without performing capability negotiation with the ONU.

In some possible implementations, if a sending order of the first packet having a low priority in the packet is before a sending order of the second packet having a high priority, and a length of the first packet is greater than a second threshold, the OLT may further actively perform fragmentation on the first packet. After the first packet is fragmented, a plurality of subpackets is obtained. The second packet may preempt a position between the subpackets. In other words, the sending order of the second packet may be before a sending order of at least one subpacket. In the foregoing manner, a transmission delay of a packet having a high priority can be effectively reduced. It should be understood that to be compatible with the existing standard, to enable the ONU to parse the subpacket after the fragmentation, each subpacket also needs to be encapsulated by using the GEM or the XGEM.

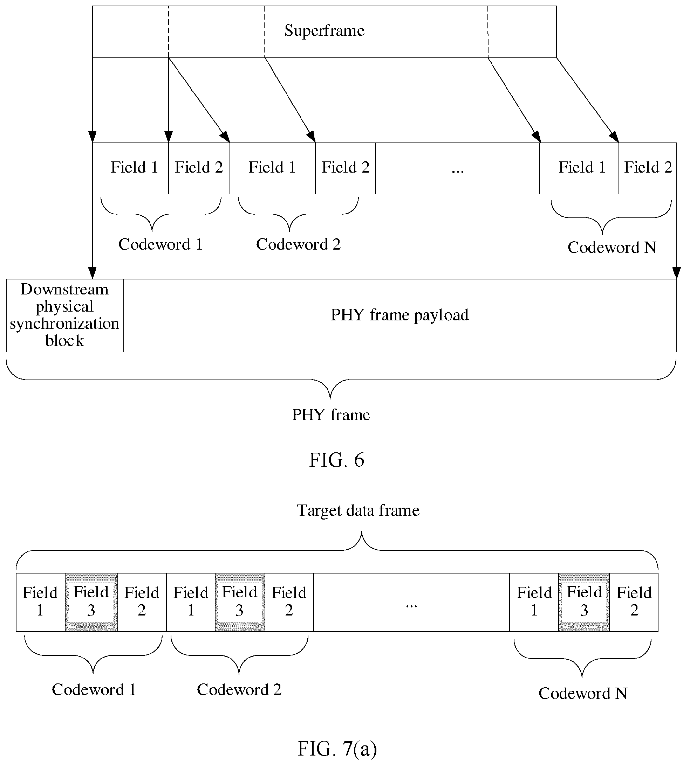

It should be noted that before sending the target data frame to the ONU, the OLT further needs to perform forward error correction (Forward Error Correction, FEC) encoding on the target data frame. The target data frame on which the FEC encoding is performed includes a plurality of codewords (codewords). FIG. 6 is a schematic diagram of a structure of an FEC codeword in an existing standard. As shown in FIG. 6, N codewords may be formed after FEC encoding is performed on a superframe, and each codeword includes a field 1 and a field 2. The field 1 is used for carrying a superframe frame header and/or a packet. The field 2 is used for carrying a check code. Further, the N codewords and a downstream physical synchronization block (downstream physical synchronization block, PSBd) form a PHY frame, and a payload area of the PHY frame is used for carrying the N codewords. It should be noted that a plurality of fields in each codeword may also be understood as being divided into a plurality of slots. Different slots are used for transmitting different information. It should be understood that in the solution shown in FIG. 6, not all codewords can transmit a packet having a high priority. To reduce a transmission delay of a packet having a high priority, in this application, a field specially used for carrying the packet having a high priority is reserved in the codeword. In this way, a deterministic transmission delay can be provided for a packet having a high priority. Details are further described below.

FIG. 7(a) is a schematic diagram of a first structure of an FEC codeword according to an embodiment of this application. As shown in FIG. 7(a), a target data frame on which the FEC encoding is performed includes N codewords. Each codeword includes a field 1, a field 2, and a field 3. The field 1 is used for carrying a subframe header after fragmentation and/or a first packet having a low priority. The field 2 is used for carrying a check code. The field 3 is used for carrying a second packet having a high priority. It should be noted that lengths of the field 1 and the field 3 in each codeword may be fixed, or may be variable. This is not specifically limited herein. In addition, relative positions of the field 1 and the field 3 in each codeword may be fixed, or may be variable. This is not specifically limited herein. For example, a position of the field 1 in a previous codeword may be before the field 3, and a position of the field 3 in a next codeword may be before the field 1.

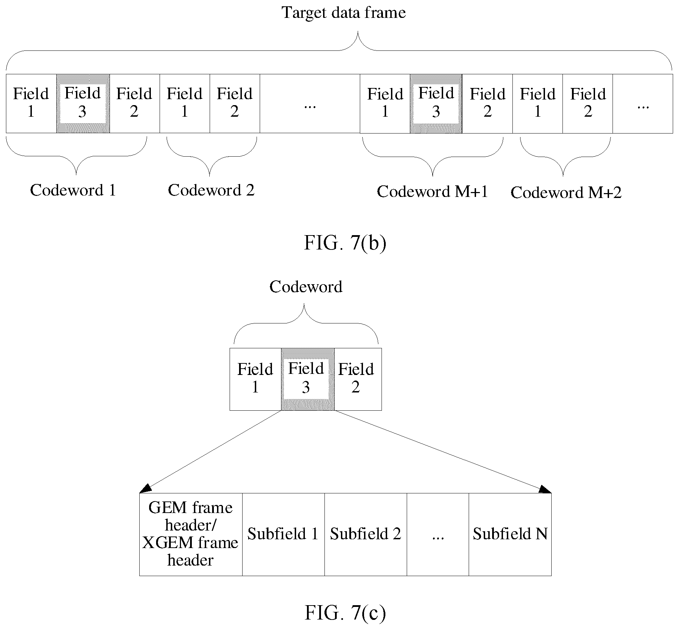

FIG. 7(b) is a schematic diagram of a second structure of an FEC codeword according to an embodiment of this application. As shown in FIG. 7(b), a field 3 does not need to be reserved in each codeword, and the field 3 may be configured with M codewords as a periodicity based on actual needs. For example, if the field 3 is configured in a codeword 1, a next codeword configured with the field 3 is a codeword M+1. It should be noted that a value of M is not limited in this application. A smaller value of M may better reduce a transmission delay of a packet having a high priority, but may also occupy more resources. Therefore, the value of M may be flexibly set based on actual needs.

It should be noted that in actual application, each codeword needs to include a field 2 used for carrying a check code. The codeword 1 certainly includes a field 1 used for carrying a frame header. Optionally, the codeword 1 may further include the field 3. Another codeword other than the codeword 1 may only include the field 1 and the field 2, may only include the field 2 and the field 3, or may include all the field 1, the field 2, and the field 3.

FIG. 7(c) is a schematic diagram of a third structure of an FEC codeword according to an embodiment of this application. As shown in FIG. 7(c), in this embodiment of this application, a plurality of subfields may be further divided based on the foregoing field 3, and each subfield is used for carrying a part of the second packet. A quantity of the subfields obtained by dividing the field 3 and a length of each subfield are not limited in this application. It should be understood that the field 3 is encapsulated as a whole by using the GEM or the XGEM. However, to reduce overheads, each subfield is no longer encapsulated one by one by using the GEM or the XGEM. Therefore, to facilitate extraction of data from a corresponding subfield by each ONU, the OLT needs to send configuration information of each subfield to each ONU, which is described below.

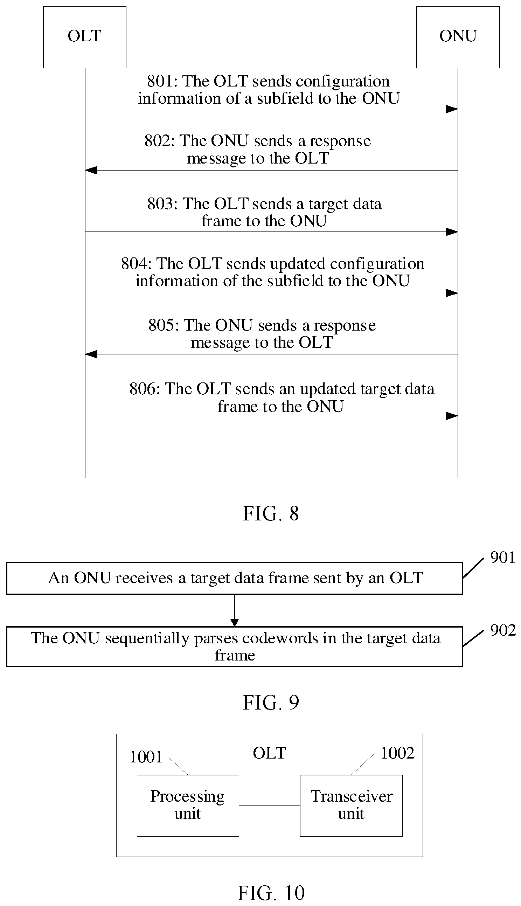

FIG. 8 is a schematic diagram of an embodiment in which the OLT notifies the ONU of configuration information of a subfield according to an embodiment of this application.

801: The OLT sends the configuration information of the subfield to the ONU.

Specifically, the OLT may send the configuration information of the subfield to the ONU through a PLOAM message or an OMCI message. The configuration information includes a start position and a length of a target subfield corresponding to the ONU. It should be understood that different subfields may carry services that belong to different ONUs. Therefore, the OLT needs to notify each ONU of a start position and a length of a subfield corresponding to the ONU, to facilitate extraction of a service from the subfield corresponding to the ONU by each ONU.

802: The ONU sends a response message to the OLT, to ensure that the configuration information of the subfield is received.

803: The OLT sends a target data frame to the ONU.

The OLT sends a service having a high priority to the ONU by using a subfield in the target data frame.

804: The OLT sends updated configuration information of the subfield to the ONU.

In some possible implementations, configuration information of each subfield in the foregoing field 3 may change. In this case, the OLT needs to send the updated configuration information of the subfield to the ONU.

805: The ONU sends a response message to the OLT, to ensure that the updated configuration information of the subfield is received.

806: The OLT sends an updated target data frame to the ONU.

203: The OLT sends the target data frame to the ONU.

It should be understood that after the OLT completes various manners of processing the original data frame described in the foregoing step 202, the OLT sends the obtained target data frame to the ONU.

In this embodiment of this application, if the length of the frame header exceeds a specified length, the OLT actively performs fragmentation on the frame header. The length of each subframe header after the fragmentation does not exceed the specified length. In addition, preemption by the packet is allowed between the subframe headers after the fragmentation. In other words, there is no need to wait for an entire frame header to be sent before sending the packet, and the packet can be sent between any subframe headers, thereby reducing a packet transmission delay. In addition, the codewords generated by the OLT include the field that carries the frame header and the packet having a low priority, and may further reserve, in some or all codewords, the field for the packet having a high priority, so that a transmission delay of the packet having a high priority can be reduced.

The foregoing describes the data frame fragmentation method performed by the OLT, and the following describes a data frame parsing method performed by the ONU.

FIG. 9 is a schematic diagram of an embodiment of a data frame parsing method according to this application. In this example, the data frame parsing method includes the following steps.

901: An ONU receives a target data frame sent by an OLT.

Specifically, for descriptions of the target data frame, refer to related descriptions of step 202 in the embodiment shown in FIG. 2. Details are not described herein again.

902: The ONU sequentially parses codewords in the target data frame.

In this embodiment, because a subframe header in the codeword is encapsulated by using a GEM or an XGEM, and the ONU may receive in advance a dedicated GEM Port ID or a dedicated XGEM Port ID sent by the OLT, the ONU may successfully parse each subframe header based on the dedicated GEM Port ID or the dedicated XGEM Port ID. For descriptions of sending the dedicated GEM Port ID or the dedicated XGEM Port ID by the OLT to the ONU, refer to the embodiment shown in FIG. 5. Details are not described herein again.

In addition, if a field 3 in the codeword is further divided into a plurality of subfields, the ONU may further receive in advance configuration information of the subfields sent by the OLT. The ONU may learn a start position and a length of a subfield corresponding to the ONU based on the configuration information, so that the ONU can successfully parse the subfields in the field 3. For descriptions of sending the subfield configuration information by the OLT to the ONU, refer to the embodiment shown in FIG. 8. Details are not described herein again.

The following describes the OLT and the ONU provided in this application.

FIG. 10 is a schematic diagram of a possible structure of an OLT according to an embodiment of this application. The OLT includes a processing unit 1001 and a transceiver unit 1002. Specifically, the processing unit 1001 is configured to perform step 201 and step 202 in the foregoing embodiment shown in FIG. 2. The transceiver unit 1002 is configured to perform step 203 in the foregoing embodiment shown in FIG. 2. In some possible implementations, the transceiver unit 1002 is further configured to perform steps of exchanging information with an ONU in the foregoing embodiments shown in FIG. 5 and FIG. 8.

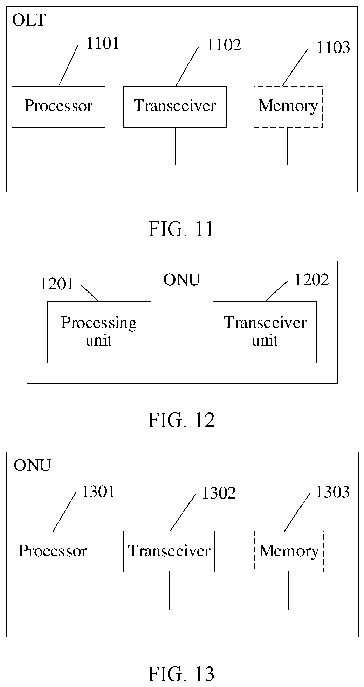

FIG. 11 is a schematic diagram of another possible structure of an OLT according to an embodiment of this application. The OLT includes a processor 1101 and a transceiver 1102. The processor 1101 and the transceiver 1102 are connected to each other through a line. It should be noted that the transceiver 1102 is configured to perform operations of sending and receiving information by the OLT in the foregoing embodiments shown in FIG. 2, FIG. 5, and FIG. 8. The processor 1101 is configured to perform other operations of the OLT other than sending and receiving information in the foregoing embodiments shown in FIG. 2, FIG. 5, and FIG. 8. In some possible implementations, the processor 1101 includes the foregoing processing unit 1001, and the transceiver 1102 includes the foregoing transceiver unit 1002. Optionally, the OLT may further include a memory 1103. The memory 1103 is configured to store program instructions and data.

FIG. 12 is a schematic diagram of a possible structure of an ONU according to an embodiment of this application. The ONU includes a processing unit 1201 and a transceiver unit 1202. Specifically, the processing unit 1201 is configured to perform step 902 in the foregoing embodiment shown in FIG. 9. The transceiver unit 1202 is configured to perform step 901 in the foregoing embodiment shown in FIG. 9. In some possible implementations, the transceiver unit 1202 is further configured to perform steps of exchanging information with an OLT in the foregoing embodiments shown in FIG. 5 and FIG. 8.

FIG. 13 is a schematic diagram of another possible structure of an ONU according to an embodiment of this application. The ONU includes a processor 1301 and a transceiver 1302. The processor 1301 and the transceiver 1302 are connected to each other through a line. It should be noted that the transceiver 1302 is configured to perform operations of sending and receiving information by the ONU in the foregoing embodiments shown in FIG. 9, FIG. 5, and FIG. 8. The processor 1301 is configured to perform other operations of the ONU other than sending and receiving information in the foregoing embodiments shown in FIG. 9, FIG. 5, and FIG. 8. In some possible implementations, the processor 1301 includes the foregoing processing unit 1201, and the transceiver 1302 includes the foregoing transceiver unit 1202. Optionally, the ONU may further include a memory 1303. The memory 1303 is configured to store program instructions and data.

It should be noted that the foregoing processor shown in FIG. 11 and FIG. 13 may use a general-purpose central processing unit (Central Processing Unit, CPU), a microprocessor, an application-specific integrated circuit ASIC, or at least one integrated circuit, and is configured to execute a related program, to implement the technical solutions provided in embodiments of this application. The foregoing memory shown in FIG. 11 and FIG. 13 may store an operating system and another application program. When the technical solutions provided in embodiments of this application are implemented by using software or firmware, program code for implementing the technical solutions provided in embodiments of this application is stored in the memory, and is executed by the processor. In an embodiment, the memory may be included inside the processor. In another embodiment, the processor and the memory are two independent structures.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

A person of ordinary skill in the art may understand that all or some of the steps in the foregoing embodiments may be implemented by hardware or a program instructing related hardware. The program may be stored in a computer-readable storage medium. The foregoing storage medium may be a read-only memory, a random access memory, or the like. Specifically, for example, the foregoing processing unit or processor may be a central processing unit, a general-purpose processor, a digital signal processor (DSP), an application-specific integrated circuit (ASIC), a field programmable gate array (FPGA) or another programmable logic device, a transistor logic device, a hardware component, or any combination thereof. Whether the foregoing functions are performed by hardware or software depends on particular applications and design constraints of the technical solutions. A person skilled in the art may use different methods to implement the described functions for each particular application, but it should not be considered that the implementation goes beyond the scope of this application.

When the software is used to implement embodiments, all or some of method embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid-State Drive, SSD)), or the like.

## Claims

1. A data frame fragmentation method, comprising:
generating, by an optical line terminal OLT, an original data frame (201), wherein the original data frame comprises a frame header and a packet, the packet comprises a first packet and a second packet, and a priority of the first packet is lower than a priority of the second packet;
if a length of the frame header is greater than a first preset value, performing, by the OLT, fragmentation on the frame header to obtain a target data frame (202),
wherein a length of each subframe header after the frame header is fragmented is less than or equal to the first preset value, the target data frame comprises a plurality of codewords, at least one codeword comprises a first field, each codeword comprises a second field, and the at least one codeword further comprises a third field, wherein the first field is used for carrying the subframe header and the first packet, the second field is used for carrying a check code, the third field is used for carrying the second packet, a sending order of the first packet is after a subframe header with a front most sending order, and the sending order of the first packet is before a sending order of at least one subframe header; and sending, by the OLT, the target data frame to an optical network unit ONU (203).

2. The method according to claim 1, wherein the frame header is a physical control block downstream PCBd, and all other subframe headers in the target data frame other than the subframe header with the front most sending order are encapsulated by using a gigabit-capable passive optical network encapsulation mode GEM; or
the frame header is a superframe FS frame header, and all other subframe headers in the target data frame other than the subframe header with the front most sending order are encapsulated by using a 10 gigabits per second passive optical network encapsulation mode XGEM.

3. The method according to claim 2, wherein each subframe header comprises a target GEM port identifier or a target XGEM port identifier, and before the sending, by the OLT, the target data frame to an ONU, the method further comprises:
sending, by the OLT, a first notification message to the ONU, wherein the first notification message comprises the target GEM port identifier, and the target GEM port identifier indicates a subframe header encapsulated by using the GEM; or the first notification message comprises the target XGEM port identifier, and the target XGEM port identifier indicates a subframe header encapsulated by using the XGEM.

4. The method according to any one of claims 1 to 3, wherein the ONU comprises a first ONU and a second ONU, the first ONU supports to perform fragmentation on the frame header, the second ONU does not support to perform fragmentation on the frame header, each subframe header in the target data frame sent by the OLT to the first ONU comprises a bandwidth map BWmap and a physical layer operations, administration, and maintenance PLOAM message, a target subframe header sent by the OLT to the second ONU comprises a BWmap and a PLOAM message, and the target subframe header is the subframe header with the front most sending order in the target data frame.

5. The method according to any one of claims 1 to 4, wherein before the sending, by the OLT, the target data frame to an ONU, the method further comprises:
if the sending order of the first packet is before a sending order of the second packet and a length of the first packet is greater than a second preset value, performing, by the OLT, fragmentation on the first packet, wherein a length of each subpacket after the first packet is fragmented is less than or equal to the second preset value, the sending order of the second packet is after a subpacket with a front most sending order, and the sending order of the second packet is before a sending order of at least one subpacket.

6. The method according to claim 5, wherein each subpacket is encapsulated by using the GEM or the XGEM.

7. The method according to any one of claims 1 to 6, wherein the third field comprises a plurality of subfields, and each subfield is used for carrying a part of the second packet.

8. A data frame parsing method, comprising:
receiving, by an optical network unit ONU, a target data frame sent by an optical line terminal OLT (901), wherein the target data frame is obtained by performing fragmentation by the OLT on a frame header of an original data frame, a length of each subframe header after the frame header is fragmented is less than or equal to a first preset value, the target data frame comprises a plurality of codewords, at least one codeword comprises a first field, each codeword comprises a second field, and the at least one codeword further comprises a third field, wherein the first field is used for carrying the subframe header and a first packet, the second field is used for carrying a check code, the third field is used for carrying a second packet, a priority of the first packet is lower than a priority of the second packet, a sending order of the first packet is after a subframe header with a front most sending order, and the sending order of the first packet is before a sending order of at least one subframe header; and
sequentially parsing, by the ONU, the codewords in the target data frame (902).

9. The method according to claim 8, wherein the frame header is a physical control block downstream PCBd, and a gigabit-capable passive optical network encapsulation mode GEM is used for all other subframe headers in the target data frame other than the subframe header with the front most sending order; or
the frame header is a superframe FS frame header, and all other subframe headers in the target data frame other than the subframe header with the front most sending order are encapsulated by using a 10 gigabits per second passive optical network encapsulation mode XGEM.

10. The method according to claim 9, wherein each subframe header comprises a target GEM port identifier or a target XGEM port identifier, and before the receiving, by an ONU, a target data frame sent by an OLT, the method further comprises:
receiving, by the ONU, a first notification message sent by the OLT, wherein the first notification message comprises the target GEM port identifier, and the target GEM port identifier indicates a subframe header encapsulated by using the GEM; or the first notification message comprises the target XGEM port identifier, and the target XGEM port identifier indicates a subframe header encapsulated by using the XGEM.

11. The method according to any one of claims 9 to 10, wherein if the ONU supports to perform fragmentation on the frame header, each subframe header comprises a bandwidth map BWmap and a physical layer operations, administration, and maintenance PLOAM message; and
if the ONU does not support to perform fragmentation on the frame header, a target subframe header comprises a BWmap and a PLOAM message, and the target subframe header is the subframe header with the front most sending order in the target data frame.

12. The method according to any one of claims 8 to 11, wherein if the sending order of the first packet is before a sending order of the second packet and a length of the first packet is greater than a second preset value, the first packet is fragmented by the OLT into a plurality of subpackets, a length of each subpacket is less than or equal to the second preset value, the sending order of the second packet is after a subpacket with a front most sending order, and the sending order of the second packet is before a sending order of at least one subpacket.

13. The method according to claim 12, wherein each subpacket is encapsulated by using the GEM or the XGEM.

14. An optical line terminal OLT, comprising a processor (1001) and a transceiver (902), wherein the processor and the transceiver are connected to each other through a line, and the processor is configured to perform the method according to any one of claims 1 to 7.

15. An optical network unit ONU, comprising a processor (1201) and a transceiver (1202), wherein the processor and the transceiver are connected to each other through a line, and the processor is configured to perform the method according to any one of claims 8 to 13.

## Patentansprüche

1. Datenrahmenfragmentierungsverfahren, umfassend:
Erzeugen, durch ein optische Leitungsendgerät, OLT, eines Originaldatenrahmens (201), wobei der Originaldatenrahmen einen Rahmen-Header und ein Paket umfasst, das Paket ein erstes Paket und ein zweites Paket umfasst und eine Priorität des ersten Pakets niedriger als eine Priorität des zweiten Pakets ist;
wenn eine Länge des Rahmen-Headers größer als ein erster voreingestellter Wert ist, Durchführen, durch das OLT, einer Fragmentierung an dem Rahmen-Header, um einen Zieldatenrahmen (202) zu erlangen,
wobei eine Länge jedes Unterrahmen-Headers, nachdem der Rahmen-Header fragmentiert wurde, kleiner als oder gleich dem ersten voreingestellten Wert ist, der Zieldatenrahmen eine Vielzahl von Codewörtern umfasst, mindestens ein Codewort ein erstes Feld umfasst, jedes Codewort ein zweites Feld umfasst und das mindestens eine Codewort ferner ein drittes Feld umfasst, wobei das erste Feld zum Tragen des Unterrahmen-Headers und des ersten Paket verwendet wird, das zweite Feld zum Tragen eines Prüfcodes verwendet wird und das dritte Feld zum Tragen des zweiten Pakets verwendet wird, eine Sendereihenfolge des ersten Pakets nach einem Unterrahmen-Header mit einer vordersten Sendereihenfolge liegt und die Sendereihenfolge des ersten Pakets vor einer Sendereihenfolge von mindestens einem Unterrahmen-Header liegt; und
Senden, durch das OLT, des Zieldatenrahmens an eine optische Netzwerkeinheit, ONU, (203).

2. Verfahren nach Anspruch 1, wobei der Rahmen-Header ein nachgelagerter physikalischer Steuerblock, PCBd, ist und alle anderen Unterrahmen-Header in dem Zieldatenrahmen als dem Unterrahmen-Header mit der vordersten Sendereihenfolge unter Verwendung eines Gigabit-fähigen passiven optischen Netzwerkverkapselungsmodus, GEM, verkapselt werden; oder
der Rahmen-Header ein Superrahmen-Rahmen-Header, FS-Rahmen-Header, ist und alle anderen Unterrahmen-Header in dem Zieldatenrahmen als dem Unterrahmen-Header mit der vordersten Sendereihenfolge unter Verwendung eines passiven optischen Netzwerkverkapselungsmodus mit 10 Gigabit pro Sekunde, XGEM, verkapselt werden.

3. Verfahren nach Anspruch 2, wobei jeder Unterrahmen-Header eine Ziel-GEM-Anschlusskennung oder eine Ziel-XGEM-Anschlusskennung umfasst und das Verfahren vor dem Senden, durch das OLT, des Zieldatenrahmens an eine ONU ferner Folgendes umfasst:
Senden, durch das OLT, einer ersten Benachrichtigungsnachricht an die ONU, wobei die erste Benachrichtigungsnachricht die Ziel-GEM-Anschlusskennung umfasst und die Ziel-GEM-Anschlusskennung einen Unterrahmen-Header anzeigt, der unter Verwendung des GEM verkapselt wurde; oder wobei die erste Benachrichtigungsnachricht die Ziel-XGEM-Anschlusskennung umfasst und die Ziel-XGEM-Anschlusskennung einen Unterrahmen-Header anzeigt, der unter Verwendung des XGEM verkapselt wurde.

4. Verfahren nach einem der Ansprüche 1 bis 3, wobei die ONU eine erste ONU und eine zweite ONU umfasst, die erste ONU Durchführen einer Fragmentierung an dem Rahmen-Header unterstützt und die zweite ONU Durchführen einer Fragmentierung an dem Rahmen-Header nicht unterstützt, jeder Unterrahmen-Header in dem Zieldatenrahmen, der von dem OLT an die erste ONU gesendet wird, eine Bandbreitenzuordnung, BWmap, und eine Nachricht für Betrieb, Verwaltung und Wartung der physischen Schicht, PLOAM-Nachricht, umfasst, ein Zielunterrahmen-Header, der von dem OLT an die zweite ONU gesendet wird, eine BWmap und eine PLOAM-Nachricht umfasst und der Zielunterrahmen-Header der Unterrahmen-Header mit der vordersten Sendereihenfolge in dem Zieldatenrahmen ist.

5. Verfahren nach einem der Ansprüche 1 bis 4, wobei das Verfahren vor dem Senden, durch das OLT, des Zieldatenrahmens an eine ONU ferner Folgendes umfasst:
wenn die Sendereihenfolge des ersten Pakets vor einer Sendereihenfolge des zweiten Pakets liegt und eine Länge des ersten Pakets größer als ein zweiter voreingestellter Wert ist, Durchführen, durch das OLT, einer Fragmentierung an dem ersten Paket, wobei eine Länge jedes Unterpakets, nachdem das erste Paket fragmentiert wurde, kleiner als oder gleich dem zweiten voreingestellten Wert ist, die Sendereihenfolge des zweiten Pakets nach einem Unterpaket mit einer vordersten Sendereihenfolge liegt und die Sendereihenfolge des zweiten Pakets vor einer Sendereihenfolge von mindestens einem Unterpaket liegt.

6. Verfahren nach Anspruch 5, wobei jedes Unterpaket unter Verwendung des GEM oder des XGEM verkapselt wird.

7. Verfahren nach einem der Ansprüche 1 bis 6, wobei das dritte Feld eine Vielzahl von Unterfeldern umfasst und jedes Unterfeld zum Tragen eines Teils des zweiten Pakets verwendet wird.

8. Datenrahmenparsingverfahren, umfassend:
Empfangen, durch eine optische Netzwerkeinheit, ONU, eines Zieldatenrahmens, der durch ein optisches Leitungsendgerät, OLT, (901) gesendet wird,
wobei der Zieldatenrahmen durch Durchführen einer Fragmentierung durch das OLT an einem Rahmen-Header eines Originaldatenrahmens erlangt wird, eine Länge jedes Unterrahmen-Headers, nachdem der Rahmen-Header fragmentiert wurde, kleiner als oder gleich einem ersten voreingestellten Wert ist, der Zieldatenrahmen eine Vielzahl von Codewörtern umfasst, mindestens ein Codewort ein erstes Feld umfasst, jedes Codewort ein zweites Feld umfasst und das mindestens eine Codewort ferner ein drittes Feld umfasst, wobei das erste Feld zum Tragen des Unterrahmen-Headers und eines ersten Paket verwendet wird, das zweite Feld zum Tragen eines Prüfcodes verwendet wird und das dritte Feld zum Tragen eines zweiten Pakets verwendet wird, wobei eine Priorität des ersten Pakets niedriger ist als eine Priorität des zweiten Pakets, eine Sendereihenfolge des ersten Pakets nach einem Unterrahmen-Header mit einer vordersten Sendereihenfolge liegt und die Sendereihenfolge des ersten Pakets vor einer Sendereihenfolge von mindestens einem Unterrahmen-Header liegt; und
sequentielles Parsen, durch die ONU, der Codewörter in dem Zieldatenrahmen (902).

9. Verfahren nach Anspruch 8, wobei der Rahmen-Header ein nachgelagerter physikalischer Steuerblock, PCBd, ist und ein Gigabit-fähiger passiver optischer Netzwerkverkapselungsmodus, GEM, verwendet wird, um alle anderen Unterrahmen-Header in dem Zieldatenrahmen als dem Unterrahmen-Header mit der vordersten Sendereihenfolge zu verkapseln; oder
der Rahmen-Header ein Superrahmen-Rahmen-Header, FS-Rahmen-Header, ist und alle anderen Unterrahmen-Header in dem Zieldatenrahmen als dem Unterrahmen-Header mit der vordersten Sendereihenfolge unter Verwendung eines passiven optischen Netzwerkverkapselungsmodus mit 10 Gigabit pro Sekunde, XGEM, verkapselt werden.

10. Verfahren nach Anspruch 9, wobei jeder Unterrahmen-Header eine Ziel-GEM-Anschlusskennung oder eine Ziel-XGEM-Anschlusskennung umfasst und das Verfahren vor dem Empfangen, durch eine ONU, eines Zieldatenrahmens, der durch ein OLT gesendet wird, ferner Folgendes umfasst:
Empfangen, durch die ONU, einer ersten Benachrichtigungsnachricht, die von dem OLT gesendet wird, wobei die erste Benachrichtigungsnachricht die Ziel-GEM-Anschlusskennung umfasst und die Ziel-GEM-Anschlusskennung einen Unterrahmen-Header anzeigt, der unter Verwendung des GEM verkapselt wurde; oder wobei die erste Benachrichtigungsnachricht die Ziel-XGEM-Anschlusskennung umfasst und die Ziel-XGEM-Anschlusskennung einen Unterrahmen-Header anzeigt, der unter Verwendung des XGEM verkapselt wurde.

11. Verfahren nach einem der Ansprüche 9 bis 10, wobei, wenn die ONU Durchführen einer Fragmentierung an dem Rahmen-Header unterstützt, jeder Unterrahmen-Header eine Bandbreitenzuordnung, BWmap, und eine Nachricht für Betrieb, Verwaltung und Wartung der physikalischen Schicht, PLOAM-Nachricht, umfasst; und
wenn die ONU Durchführen einer Fragmentierung an dem Rahmen-Header nicht unterstützt, ein Zielunterrahmen-Header eine BWmap und eine PLOAM-Nachricht umfasst und der Zielunterrahmen-Header der Unterrahmen-Header mit der vordersten Sendereihenfolge in dem Zieldatenrahmen ist.

12. Verfahren nach einem der Ansprüche 8 bis 11, wobei, wenn die Sendereihenfolge des ersten Pakets vor einer Sendereihenfolge des zweiten Pakets liegt und eine Länge des ersten Pakets größer als ein zweiter voreingestellter Wert ist, das erste Paket durch das OLT in eine Vielzahl von Unterpaketen fragmentiert wird, eine Länge jedes Unterpakets kleiner als oder gleich dem zweiten voreingestellten Wert ist, die Sendereihenfolge des zweiten Pakets nach einem Unterpaket mit einer vordersten Sendereihenfolge liegt und die Sendereihenfolge des zweiten Pakets vor einer Sendereihenfolge von mindestens einem Unterpaket liegt.

13. Verfahren nach Anspruch 12, wobei jedes Unterpaket unter Verwendung des GEM oder des XGEM verkapselt wird.

14. Optisches Leitungsendgerät, OLT, umfassend einen Prozessor (1001) und einen Sendeempfänger (902), wobei der Prozessor und der Sendeempfänger über eine Leitung miteinander verbunden sind und der Prozessor dazu konfiguriert ist, das Verfahren nach einem der Ansprüche 1 bis 7 durchzuführen.

15. Optische Netzwerkeinheit, ONU, umfassend einen Prozessor (1201) und einen Sendeempfänger (1202), wobei der Prozessor und der Sendeempfänger über eine Leitung miteinander verbunden sind und der Prozessor dazu konfiguriert ist, das Verfahren nach einem der Ansprüche 8 bis 13 durchzuführen.

## Revendications

1. Procédé de fragmentation de trame de données, comprenant :
la génération, par un terminal de ligne optique OLT, d'une trame de données d'origine (201), dans lequel la trame de données d'origine comprend un en-tête de trame et un paquet, le paquet comprend un premier paquet et un second paquet, et une priorité du premier paquet est inférieure à une priorité du second paquet ;
si une longueur de l'en-tête de trame est supérieure à une première valeur prédéfinie, la réalisation, par l'OLT, d'une fragmentation sur l'en-tête de trame pour obtenir une trame de données cible (202),
dans lequel la longueur de chaque en-tête de sous-trame après fragmentation de l'en-tête de trame est inférieure ou égale à la première valeur prédéfinie, la trame de données cible comprend une pluralité de mots de code, au moins un mot de code comprend un premier champ, chaque mot de code comprend un deuxième champ, et l'au moins un mot de code comprend également un troisième champ, dans lequel le premier champ est utilisé pour transporter l'en-tête de sous-trame et le premier paquet, le deuxième champ est utilisé pour transporter un code de commande, le troisième champ est utilisé pour transporter le second paquet, l'ordre d'envoi du premier paquet est après un en-tête de sous-trame avec un ordre d'envoi le plus en avant, et l'ordre d'envoi du premier paquet précède l'ordre d'envoi d'au moins un en-tête de sous-trame ; et
l'envoi, par l'OLT, de la trame de données cible à une unité de réseau optique ONU (203).

2. Procédé selon la revendication 1, dans lequel l'en-tête de trame est un bloc de commande physique aval PCBd, et tous les autres en-têtes de sous-trames dans la trame de données cible autres que l'en-tête de sous-trame dont l'ordre d'envoi est le plus avancé, sont encapsulés à l'aide d'un mode d'encapsulation de réseaux optiques passifs ayant une capacité de l'ordre du gigabit, GEM ; ou
l'en-tête de trame est un en-tête de trame FS de supertrame, et tous les autres en-têtes de sous-trame dans la trame de données cible autres que l'en-tête de sous-trame avec l'ordre d'envoi le plus en avant sont encapsulés à l'aide d'un mode d'encapsulation de réseaux optiques passifs de 10 gigabits par seconde, XGEM.

3. Procédé selon la revendication 2, dans lequel chaque en-tête de sous-trame comprend un identifiant de port GEM cible ou un identifiant de port XGEM cible, et avant l'envoi, par l'OLT, de la trame de données cible à une ONU, le procédé comprend également :
l'envoi, par l'OLT, d'un premier message de notification à l'ONU, dans lequel le premier message de notification comprend l'identifiant de port GEM cible, et l'identifiant de port GEM cible indique un en-tête de sous-trame encapsulé à l'aide du GEM ; ou le premier message de notification comprend l'identifiant de port XGEM cible, et l'identifiant de port XGEM cible indique un en-tête de sous-trame encapsulé à l'aide du XGEM.

4. Procédé selon l'une quelconque des revendications 1 à 3, dans lequel l'ONU comprend une première ONU et une seconde ONU, la première ONU prend en charge la fragmentation de l'en-tête de trame, la seconde ONU ne prend pas en charge la fragmentation de l'en-tête de trame, chaque en-tête de sous-trame dans la trame de données cible envoyée par l'OLT à la première ONU comprend une carte de bande passante BWmap et un message PLOAM d'opérations, d'administration et de maintenance de la couche physique, un en-tête de sous-trame cible envoyé par l'OLT à la seconde ONU comprend une BWmap et un message PLOAM, et l'en-tête de sous-trame cible est l'en-tête de sous-trame avec l'ordre d'envoi le plus en avant dans la trame de données cible.

5. Procédé selon l'une quelconque des revendications 1 à 4, dans lequel avant l'envoi, par l'OLT, de la trame de données cible à une ONU, le procédé comprend également :
si l'ordre d'envoi du premier paquet est avant un ordre d'envoi du second paquet et qu'une longueur du premier paquet est supérieure à une seconde valeur prédéfinie, la réalisation, par l'OLT, d'une fragmentation sur le premier paquet, dans lequel une longueur de chaque sous-paquet après que le premier paquet est fragmenté est inférieure ou égale à la seconde valeur prédéfinie, l'ordre d'envoi du second paquet est postérieur à un sous-paquet avec un ordre d'envoi le plus en avant, et l'ordre d'envoi du second paquet est antérieur à un ordre d'envoi d'au moins un sous-paquet.

6. Procédé selon la revendication 5, dans lequel chaque sous-paquet est encapsulé en utilisant le GEM ou le XGEM.

7. Procédé selon l'une quelconque des revendications 1 à 6, dans lequel le troisième champ comprend une pluralité de sous-champs, et chaque sous-champ est utilisé pour transporter une partie du second paquet.

8. Procédé d'analyse de trame de données, comprenant :
la réception, par une unité de réseau optique ONU, d'une trame de données cible envoyée par un terminal de ligne optique OLT (901),
dans lequel la trame de données cible est obtenu par réalisation d'une fragmentation par l'OLT sur l'en-tête de trame de la trame de données d'origine, la longueur de chaque en-tête de sous-trame après fragmentation de l'en-tête de trame est inférieure ou égale à une première valeur prédéfinie, la trame de données cible comprend une pluralité de mots de code, au moins un mot de code comprend un premier champ, chaque mot de code comprend un deuxième champ, et l'au moins un mot de code comprend également un troisième champ, dans lequel le premier champ est utilisé pour transporter l'en-tête de sous-trame et le premier paquet, le deuxième champ est utilisé pour transporter un code de commande, le troisième champ est utilisé pour transporter un second paquet, une priorité du premier paquet est inférieure à une priorité du second paquet, l'ordre d'envoi du premier paquet est après un en-tête de sous-trame avec un ordre d'envoi le plus en avant, et l'ordre d'envoi du premier paquet précède l'ordre d'envoi d'au moins un en-tête de sous-trame ; et
l'analyse séquentielle, par l'ONU, des mots de code dans la trame de données cible (902).

9. Procédé selon la revendication 8, dans lequel l'en-tête de trame est un bloc de commande physique aval PCBd, et une mode d'encapsulation de réseaux optiques passifs ayant une capacité de l'ordre du gigabit, GEM, est utilisé pour tous les autres en-têtes de sous-trames dans la trame de données cible autres que l'en-tête de sous-trame dont l'ordre d'envoi est le plus avancé ; ou
l'en-tête de trame est un en-tête de trame FS de supertrame, et tous les autres en-têtes de sous-trame dans la trame de données cible autres que l'en-tête de sous-trame avec l'ordre d'envoi le plus en avant sont encapsulés à l'aide d'un mode d'encapsulation de réseaux optiques passifs de 10 gigabits par seconde, XGEM.

10. Procédé selon la revendication 9, dans lequel chaque en-tête de sous-trame comprend un identifiant de port GEM cible ou un identifiant de port XGEM cible, et avant la réception, par une ONU, d'une trame de données cible envoyée par un OLT, le procédé comprend également :
la réception, par l'ONU, d'un premier message de notification envoyé par l'OLT, dans lequel le premier message de notification comprend l'identifiant de port GEM cible, et l'identifiant de port GEM cible indique un en-tête de sous-trame encapsulé à l'aide du GEM ; ou le premier message de notification comprend l'identifiant de port XGEM cible, et l'identifiant de port XGEM cible indique un en-tête de sous-trame encapsulé à l'aide du XGEM.

11. Procédé selon l'une quelconque des revendications 9 et 10, dans lequel, si l'ONU prend en charge la réalisation de la fragmentation de l'en-tête de trame, chaque en-tête de sous-trame comprend une carte de bande passante BWmap et un message PLOAM d'opérations, d'administration et de maintenance de couche physique ; et
si l'ONU ne prend pas en charge la réalisation de la fragmentation de l'en-tête de trame, un en-tête de sous-trame cible comprend un BWmap et un message PLOAM, et l'en-tête de sous-trame cible est l'en-tête de sous-trame avec l'ordre d'envoi le plus en avant dans la trame de données cible.

12. Procédé selon l'une quelconque des revendications 8 à 11, dans lequel si l'ordre d'envoi du premier paquet est avant un ordre d'envoi du second paquet et qu'une longueur du premier paquet est supérieure à une seconde valeur prédéfinie, le premier paquet est fragmenté par l'OLT en une pluralité de sous-paquets, une longueur de chaque sous-paquet est inférieure ou égale à la seconde valeur prédéfinie, l'ordre d'envoi du second paquet est postérieur à un sous-paquet avec un ordre d'envoi le plus en avant, et l'ordre d'envoi du second paquet est antérieur à un ordre d'envoi d'au moins un sous-paquet.

13. Procédé selon la revendication 12, dans lequel chaque sous-paquet est encapsulé en utilisant le GEM ou le XGEM.

14. Terminal de ligne optique OLT, comprenant un processeur (1001) et un émetteur-récepteur (902), dans lequel le processeur et l'émetteur-récepteur sont connectés l'un à l'autre par une ligne, et le processeur est configuré pour réaliser le procédé selon l'une quelconque des revendications 1 à 7.

15. Unité de réseau optique, ONU, comprenant un processeur (1201) et un émetteur-récepteur (1202), dans lequel le processeur et l'émetteur-récepteur sont connectés l'un à l'autre par une ligne, et le processeur est configuré pour réaliser le procédé selon l'une quelconque des revendications 8 à 13.
